# EUROPEAN PATENT SPECIFICATION

(11) **EP 3 388 323 B1**
(45) Date of publication and mention of the grant of the patent: **11.09.2019**
(21) Application number: 17201560.4
(22) Date of filing: 14.11.2017
(51) Int. Cl.: B62M 9/08

(54) **BICYCLE CRANKSET WITH ECCENTRIC CHAINRING**
FAHRRADKURBELSATZ MIT EXZENTRISCHEM KETTENBLATT
PÉDALIER DE BICYCLETTE AVEC PLATEAU EXCENTRIQUE

(30) Priority: 11.04.2017 TW 106112071
(43) Date of publication of application: 17.10.2018
(73) Proprietor: Drivetrain Tech Solution Inc., Taichung City (TW)
(72) Inventor: CHEN, Po-Cheng, Taichung City (TW)
(74) Representative: Cabinet Chaillot

(56) References cited:
- WO-A1-2013/104663
- US-A1- 2013 281 239

## Description

### BACKGROUND OF THE INVENTION

### 1. Technical Field

The present invention relates to a bicycle, and more particularly to a bicycle crankset with an eccentric chainring.

### 2. Description of Related Art

Typically, a bicycle is provided with a round chainring and a pair of crankarms connected to the chainring through a spider. A rider steps pedals of the crankarms to turn the chainring, so as to drive the bicycle forward. However, a motion of the crankarms is round, and a motion of feet of the rider is up and down. Therefore, lots of the power transmitted from rider's feet to the crankarms will loss.

When a rider is stepping the crankarms, the power is positive when the rider steps the crankarms downward, and the power is maximum when the crankarm is moved to a horizontal position. After the lowest position, the power is negative which is helpless to the moving of bicycle.

The modern bicycle provides an elliptical chainring to solve this problem. Taiwan patent no. 1399322 disclosed a bicycle chainring with different radiuses. This chainring provides different arms of force according to the position of the crankarm to improve the efficiency of stepping the crankarms.

U.S. patent no. 7,749,117 disclosed an elliptical chainring. The chainring is adjustable according to its position and shape to meet various needs of different riders. This patent also provides the chainring with the parameters the same as a normal chainring at the region when the rider is stepping downward to reduce the loading of knees.

Document US 2013/281239 discloses a bicycle crank set with an ovoid chainring, a spider and crank arms, the chainring having two sets of bores and allowing fine tuning the angle between the crank arms. WO 2013/104663 further discloses another ovoid chainring according to the prior art.

### BRIEF SUMMARY OF THE INVENTION

In view of the above, the primary objective of the present invention is to provide a bicycle crankset, which is adjustable for its motion to obtain high torque output and high power efficiency.

In order to achieve the objective of the present invention, a bicycle crankset, which is adapted to connect to a chain, includes a chainring and a crankarm. The chainring has a round circumference and a plurality of teeth on the circumference to engage the chain. The chainring has a chainring center, which is a center of the circumference, and a connecting portion. The chainring has a plurality of connecting bores of the first noncircular motion path on the connecting portion, wherein the connecting bores of the first noncircular motion path have a center of rotation, and the center of rotation of the connecting bores of the first noncircular motion path is kept a distance from the chainring center. The chainring has a plurality of connecting bores of a circular motion path on the connecting portion, wherein the connecting bores of the circular motion path have a center of rotation, and a location of the center of rotation of the connecting bores of the circular motion path is the same as the chairing center. The crankarm has a plurality of connecting arms at an end thereof, and an axial bore at the end having the connecting arms, wherein the crankarm has a center of rotation at a center of the axial bore, each of the connecting arms has a bore, and distances between center of the bores and the center of rotation of the crankarm are the same. The connecting arms of the crankarm are selected to be secured to the connecting bores of the first noncircular motion path or the connecting bores of the circular motion path of the chainring; the chainring provides a first noncircular path of motion when the connecting arms of the crankarm are secured to the connecting bores of the first noncircular motion path, and chainring provides a circular path of motion when the connecting arms of the crankarm are secured to the connecting bores of the circular motion path.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a front view of the chainring of a preferred embodiment of the present invention;
FIG. 2 is an exploded view of the preferred embodiment of the present invention;
FIG. 3 is a front view of the preferred embodiment of the present invention;
FIG. 4 is a front view of the preferred embodiment of the present invention, showing the crankarm connected to the connecting bores of the first noncircular motion path;
FIG. 5 is a front view of the preferred embodiment of the present invention, showing the crankarm connected to the connecting bores of the second noncircular motion path;
FIG. 6 is a front view of the preferred embodiment of the present invention, showing the crankarm connected to the connecting bore of round motion path;
FIG. 7 is a sketch view of the preferred embodiment of the present invention, showing the different paths of motion;
FIG. 8 is a front view of the preferred embodiment of the present invention, showing the included angle between the crankarm and the major axis; and
FIG. 9 is a front view of the preferred embodiment of the present invention, showing another included angle between the crankarm and the major axis.

### DETAILED DESCRIPTION OF THE INVENTION

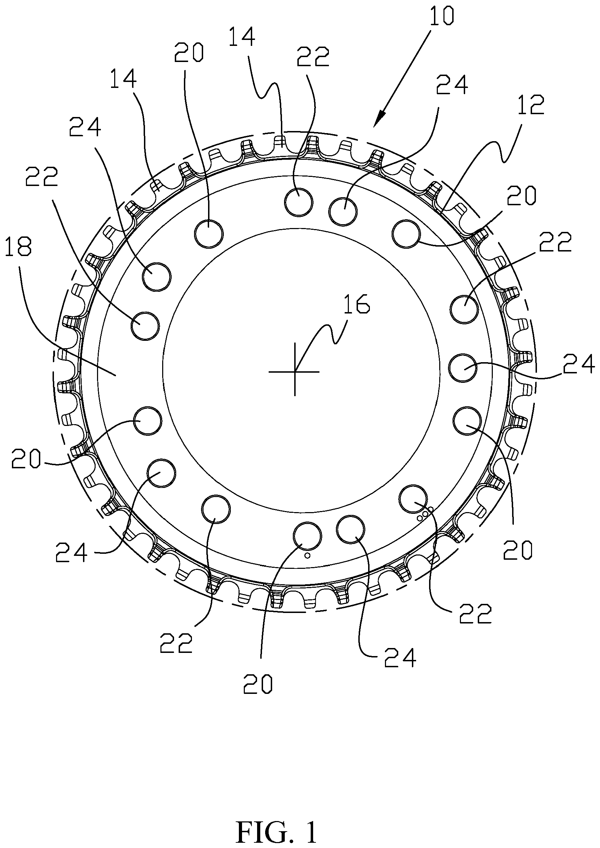

FIG. 1 shows a bicycle crankset of the preferred embodiment of the present invention, including a chainring 10. The chainring 10 has a round circumference 12 and a plurality of teeth 14 on the round circumference 12. A center of the round circumference 12 is defined as a chainring center 16. The chainring 10 has an annular connecting portion 18 behind the teeth 14.

The chainring 10 is provided with a plurality of connecting bores 20 of a first noncircular motion path on the connecting portion 18. In order to provide a noncircular path of motion, distances between centers of the connecting bores 20 of the first noncircular motion path and the chainring center 16 are different. In other words, the connecting bores 20 of the first noncircular motion path has a center of rotation, and the center of rotation of the connecting bores 20 of the first noncircular motion path is kept a distance from the chainring center 16.

The chainring 10 is provided with a plurality of connecting bores 22 of a second noncircular motion path on the connecting portion 18. In order to provide another noncircular path of motion, distances between centers of the connecting bores 22 of the second noncircular motion path and the chainring center 16 are different. In other words, the connecting bores 22 of the second noncircular motion path has a center of rotation, and the center of rotation of the connecting bores 22 of the second noncircular motion path is kept a distance from the chainring center 16, and also kept a distance from the center of rotation of the connecting bores 20 of the first noncircular motion path.

The chainring 10 is provided with a plurality of connecting bores 24 of a circular motion path on the connecting portion 18. The connecting bores 24 are on a circumference, and a center of the circumference is the same as the chainring center 16.

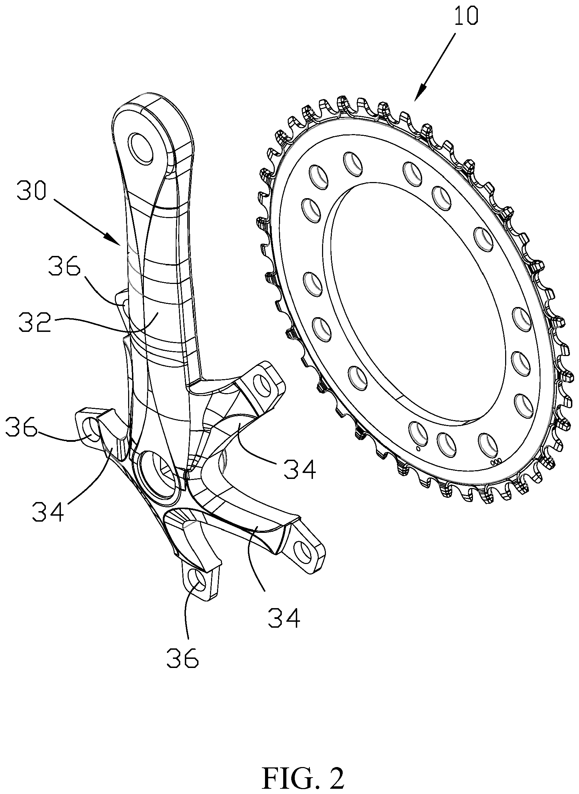

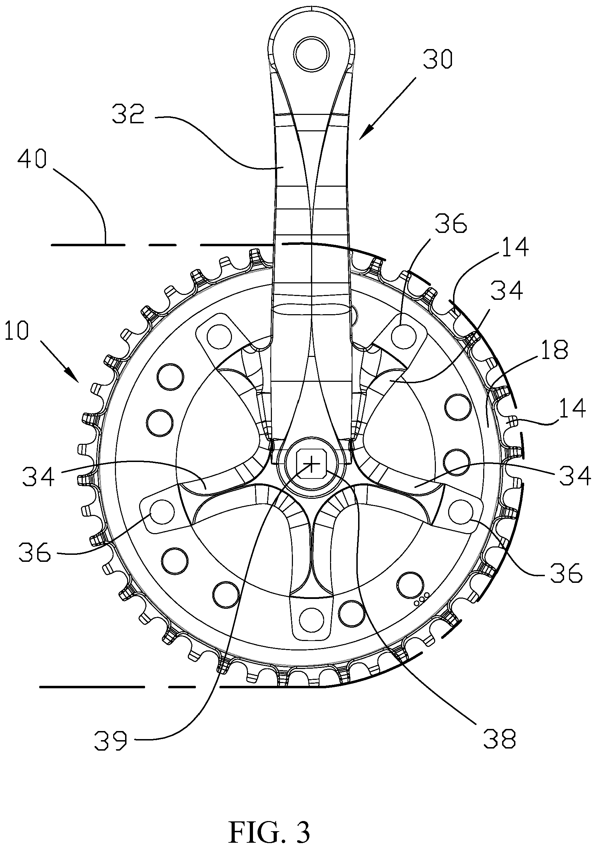

As shown in FIGS. 2 and 3, the bicycle crankset of the preferred embodiment of the present invention further includes a crankarm 30 connected to the chainring 10. The crank 30 has five connecting arms 34, each of which has a bore 36 adjacent to a distal end thereof.

As shown in FIG. 3, the crankarm 30 has an axial bore 38 at the end connected to the connecting arms 34. A center of the axial bore forms a center of rotation 39 of the crankarm 30. Distances between the center of rotation 39 and the bores 36 of the connecting arms 34 are the same.

The connecting arms 34 of the crankarm 30 are selected to be secured to the connecting bores 20 of the first noncircular motion path, the connecting bores 22 of the second noncircular motion path, or the connecting bores 24 of the circular motion path. A chain 40 engages the teeth 14 of the chainring 10. A bracket axle has an end connected to the axial bore 38 of the crankarm 30, and an opposite end is connected to another crankarm (not shown). A rider steps the crankarm 30 to rotate the chainring 10.

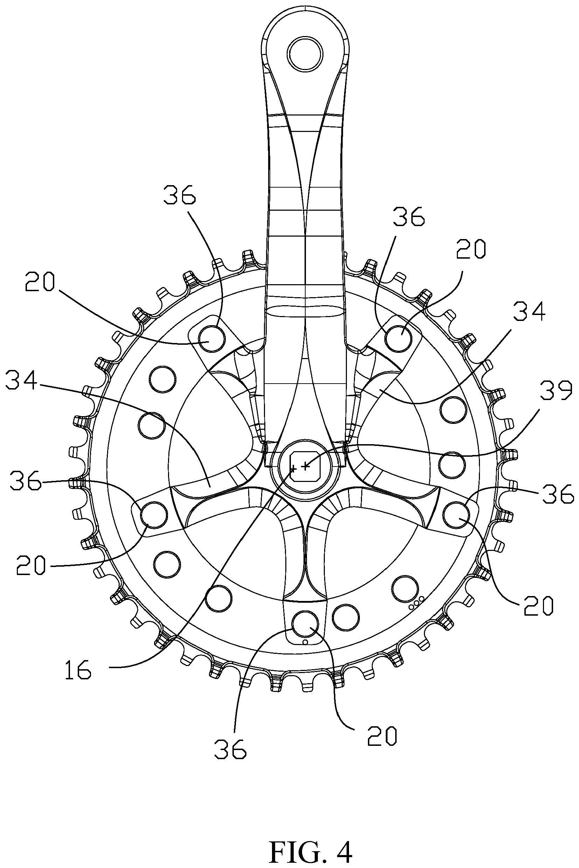

As shown in FIG. 4, if the connecting arms 34 of the crankarm 30 are secured to the connecting bores 20 of the first noncircular motion path of the chainring 10, the center of rotation 39 of the crankarm 30 is kept a first distance from the chainring center 16 to make the chainring 10 provide a first noncircular path of motion.

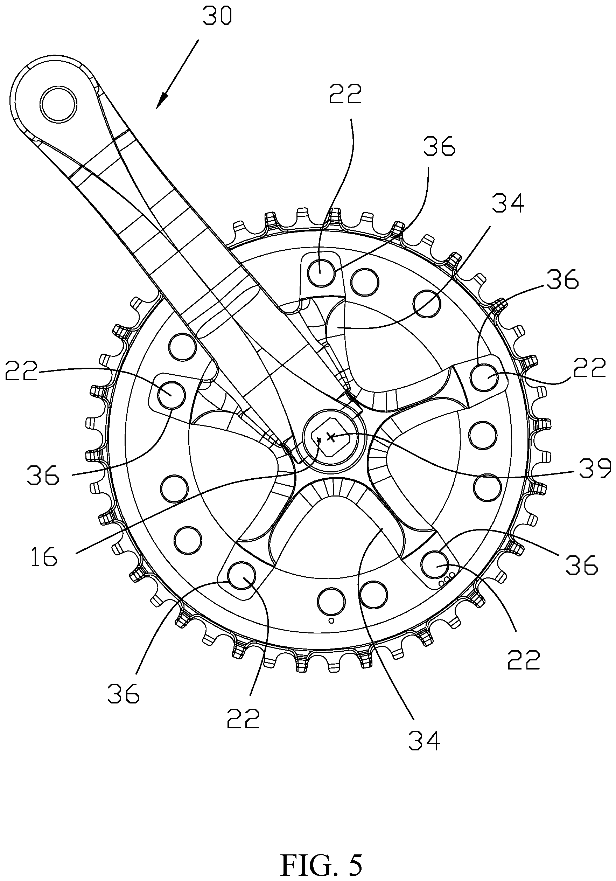

As shown in FIG. 5, if the connecting arms 34 of the crankarm 30 are secured to the connecting bores 22 of the second noncircular motion path of the chainring 10, the center of rotation 39 of the crankarm 30 is kept a second distance from the chainring center 16 to make the chainring 10 provide a second noncircular path of motion.

In comparison of FIG. 4 and FIG. 5, a direction and a distance between the center of rotation 39 and the chainring center 16 when the connecting arms 34 of the crankarm 30 are secured to the connecting bores 20 of the first noncircular motion path of the chainring 10 are not the same as that when the connecting arms 34 of the crankarm 30 are secured to the connecting bores 22 of the second noncircular motion path of the chainring 10. Therefore, the first noncircular path of motion of the chainring 10 is different from second noncircular path of motion of the chainring 10.

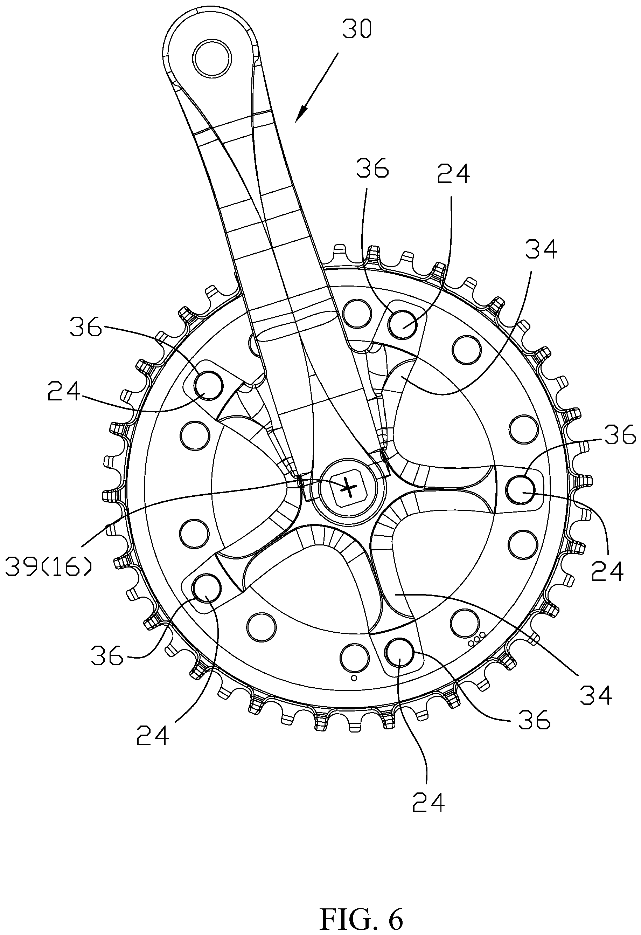

As shown in FIG. 6, if the connecting arms 34 of the crankarm 30 are secured to the connecting bores 24 of the circular motion path of the chainring 10, the center of rotation 39 of the crankarm 30 is the same as the chainring center 16 to make the chainring 10 provide a circular path of motion.

In conclusion, a rider may change the path of motion of the chainring 10 to change the torque output of the crankset according to different requirements by changing the connecting arms 34 of the crankarm 30 to be secured to different sets of connecting bores 20, 22, 24.

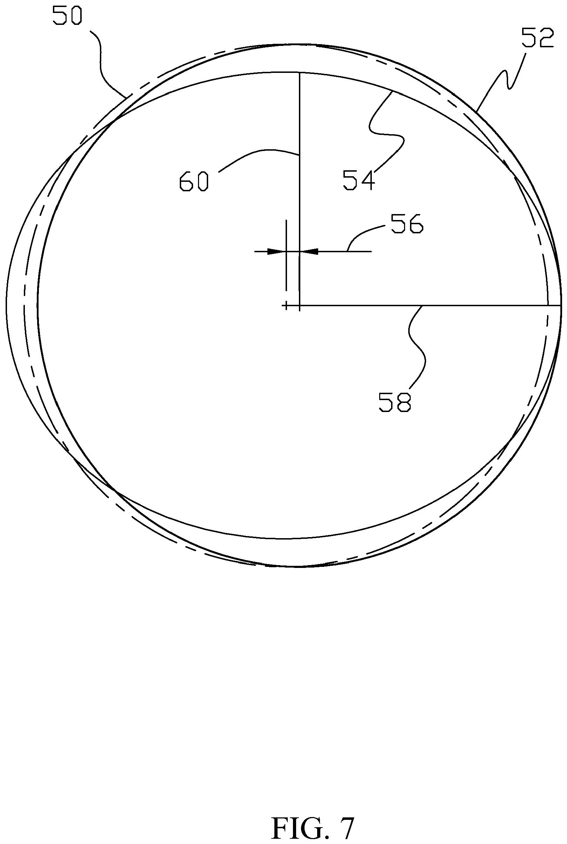

FIG. 7 shows a circular path of motion 50, an eccentric path of motion 52, and an elliptical path of motion 54. The circular path of motion 50 will be changed to the eccentric path of motion 52 when a center of rotation is moved for an eccentric distance 56. The eccentric path of motion 52 is the noncircular path of motion as described above. The eccentric path of motion 52 will change by shifting the center of rotation. Therefore, we can find a location of center of rotation, which provides the eccentric path of motion 52 approaching to the elliptical path of motion 54. A simple way is to adjust the longest distance from the center of rotation of the eccentric path of motion 52 equal to a length 58 of a semi-major axis of the elliptical path of motion 54. This eccentric path of motion 52 will have the similar effect as the elliptical path of motion 54. For example, a desired elliptical path of motion 54 has a farthest position of 53T power, so the eccentric path of motion 52 is adjusted to have a farthest position of 53T power.

In conclusion, the present invention provides the eccentric distance 56 to change the circular path of motion 20 into the eccentric path of motion 52, and uses the eccentric path of motion 52 to simulate the elliptical path of motion 54. Therefore, we may define that the eccentric path of motion 52 has a semi-major axis and a semi-minor axis like the elliptical path of motion 54. A length 58 of the semi-major axis is the longest distance between the center of rotation and the eccentric path of motion 52, and a length 60 of the semi-minor axis is the shortest distance between the center of rotation and the eccentric path of motion 52. A ratio of the length 58 of the semi-major axis and the length 60 of the semi-minor axis is in a range 1.1 and 1.3, and a preferred ratio is 1.215.

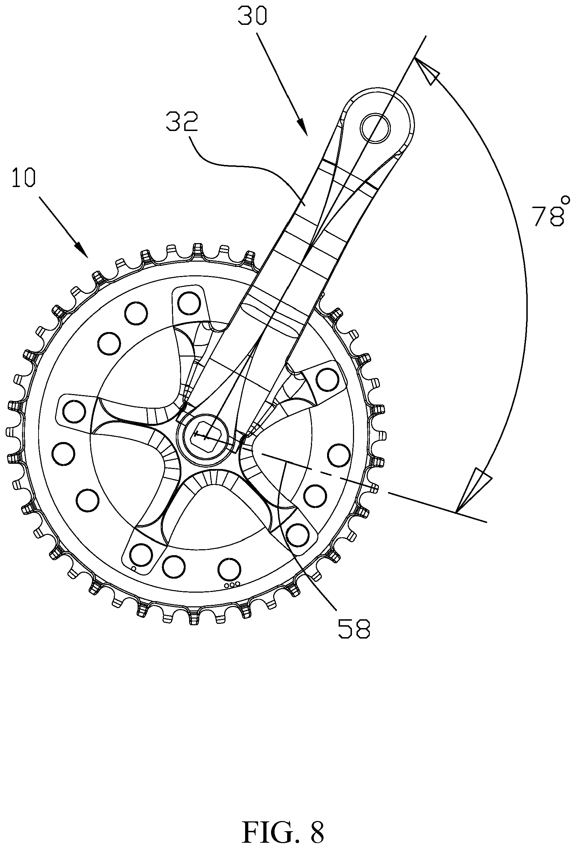

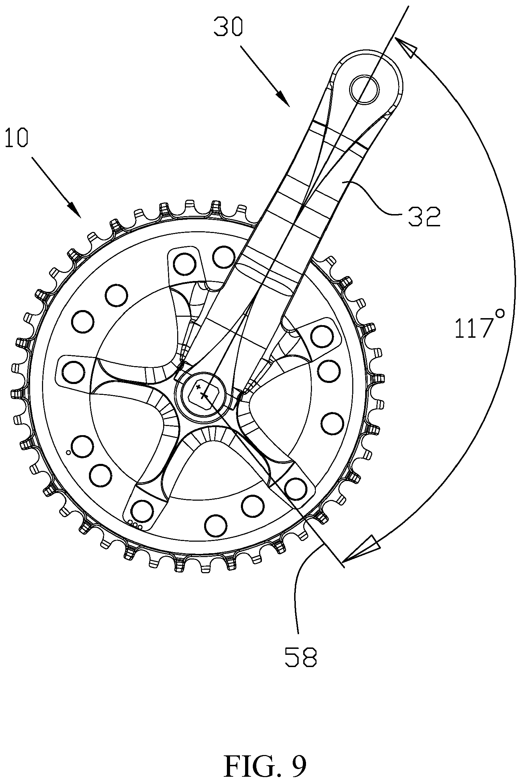

Changing a location of the crankarm 30 secured on the chainring 10 may change a path of moth of the chainring 10, and furthermore, it will change an included angle between the crankarm 30 and the semi-major axis of the path of motion as well. FIG. 8 shows that the crankarm 30 is secured to the connecting bores 20 of the first noncircular motion path of the chainring 10, and an included angle between the crankarm 30 and the semi-major axis of the first noncircular path of motion is about 78 degrees. FIG. 9 shows that the crankarm 30 is secured to the connecting bores 22 of the second noncircular motion path of the chainring 10, and an included angle between the crankarm 30 and the semi-major axis of the second noncircular path of motion is about 117 degrees.

The present invention set that a ratio of the length 58 of the semi-major axis and the length 60 of the semi-minor axis of the noncircular path of motion is in a range 1.1 and 1.3, and the included angle between the crankarm 30 and the semi-major axis of the noncircular path of motion is in a range between 75 degrees and 120 degrees. It may reduce the loading of the rider's knees. Besides, the eccentric path of motion 52 has a smooth change of radius of curvature to reduce the unbalance condition when the rider is stepping the pedals. Therefore, the present invention may provide various path of motion of the chainring 10 to provide the rider a balance, stable, and efficient cycling.

It must be pointed out that the embodiments described above are only some preferred embodiments of the present invention. All equivalent structures which employ the concepts disclosed in this specification and the appended claims should fall within the scope of the present invention.

## Claims

1. A bicycle crankset, which is adapted to connect to a chain (40), comprises:
a chainring (10) having a round circumference (12) and a plurality of teeth (14) on the circumference (12) to engage the chain, wherein the chainring (10) has a chainring center (16), which is a center of the circumference (12), and a connecting portion (18);
the chainring (10) having a plurality of connecting bores (20) of a first noncircular motion path on the connecting portion (18), wherein the connecting bores (20) of the first noncircular motion path have a center of rotation, and the center of rotation of the connecting bores (20) of the first noncircular motion path is kept a distance from the chainring center (16);
the chainring (10) having a plurality of connecting bores (24) of a circular motion path on the connecting portion (18), wherein the connecting bores (24) of the circular motion path have a center of rotation, and a location of the center of rotation of the connecting bores (24) of the circular motion path is the same as the chainring center (16); and
a crankarm (30) having a plurality of connecting arms (34) at an end thereof, and an axial bore (38) at the end having the connecting arms (34), wherein the crankarm (30) has a center of rotation at a center of the axial bore (38), each of the connecting arms (34) has a bore (36), and distances between centers of the bores (36) and the center of rotation of the crankarm (30) are the same;
wherein the connecting arms (34) of the crankarm (30) are selected to be secured to the connecting bores (20) of the first noncircular motion path or the connecting bores (24) of the circular motion path of the chainring (10); the chainring (10) provides a first noncircular path of motion when the connecting arms (34) of the crankarm (30) are secured to the connecting bores (20) of the first noncircular motion path, and the chainring (10) provides a circular path of motion when the connecting arms (34) of the crankarm (30) are secured to the connecting bores (24) of the circular motion path.

2. The bicycle crankset of claim 1, wherein the chainring (10) has a plurality of connecting bores (22) of a second noncircular motion path on the connecting portion (18), wherein the connecting bores (22) of the second noncircular motion path have a center of rotation, and the center of rotation of the connecting bores (22) of the second noncircular motion path is kept a distance from the chainring center (16), and also kept a distance from the center of rotation of the connecting bores (20) of the first noncircular motion path; the chainring (10) provides a second noncircular path of motion when the connecting arms (34) of the crankarm (30) are selected to be secured to the connecting bores (22) of the second noncircular motion path.

3. The bicycle crankset of claim 1, wherein a path of the first noncircular path of motion has a semi-major axis and a semi-minor axis, and a ratio of a length of the semi-major axis and a length of the semi-minor axis is in a range between 1.1 and 1.3.

4. The bicycle crankset of claim 1, wherein an included angle between the crankarm (30) and a semi-major axis of the first noncircular path of motion is in a range between 75 degrees and 120 degrees.

## Patentansprüche

1. Fahrradkurbelsatz, der ausgelegt ist, um mit einer Kette (40) verbunden zu sein, umfassend:
ein Kettenblatt (10) mit einem runden Umfang (12) und einer Vielzahl von Zähnen (14) auf dem Umfang (12), um die Kette einzugreifen, wobei das Kettenblatt (10) ein Kettenblattzentrum (16) aufweist, die das Zentrum des Umfangs (12) ist, und einen Verbindungsabschnitt (18);
wobei das Kettenblatt (10) eine Vielzahl von Verbindungsbohrungen (20) eines ersten nicht runden Bewegungspfads auf dem Verbindungsabschnitt (18) aufweist, wobei die Verbindungsbohrungen (20) des ersten nicht runden Bewegungspfads ein Rotationszentrum aufweisen und das Rotationszentrum der Verbindungsbohrungen (20) des ersten nicht runden Bewegungspfads in einem Abstand vom Kettenblattzentrum (16) gehalten wird;
wobei das Kettenblatt (10) eine Vielzahl von Verbindungsbohrungen (24) eines runden Bewegungspfads auf dem Verbindungsabschnitt (18) aufweist, wobei die Verbindungsbohrungen (24) des runden Bewegungspfads ein Rotationszentrum aufweisen und eine Position des Rotationszentrums der Verbindungsbohrungen (24) des runden Bewegungspfads die gleiche wie das Kettenblattzentrum (16) ist; und
einen Kurbelarm (30) mit einer Vielzahl von Verbindungsarmen (34) an einem Ende davon und einer axialen Bohrung (38) am Ende mit den Verbindungsarmen (34), wobei der Kurbelarm (30) ein Rotationszentrum im Zentrum der axialen Bohrung (38) aufweist, jeder der Verbindungsarme (34) eine Bohrung (36) aufweist und Abstände zwischen den Zentren der Bohrungen (36) und dem Rotationszentrum des Kurbelarms (30) gleich sind;
wobei die Verbindungsarme (34) des Kurbelarms (30) ausgewählt sind, um an die Verbindungsbohrungen (20) des ersten nicht runden Bewegungspfads oder die Verbindungsbohrungen (24) des runden Bewegungspfads des Kettenblatts (10) gesichert zu sein; das Kettenblatt (10) einen ersten nicht runden Bewegungspfad bereitstellt, wenn die Verbindungsarme (34) des Kurbelarms (30) an die Verbindungsbohrungen (20) des ersten nicht runden Bewegungspfads gesichert sind und das Kettenblatt (10) einen runden Bewegungspfad bereitstellt, wenn die Verbindungsarme (34) des Kurbelarms (30) an die Verbindungsbohrungen (24) des runden Bewegungspfads gesichert sind.

2. Fahrradkurbelsatz nach Anspruch 1, wobei das Kettenblatt (10) eine Vielzahl von Verbindungsbohrungen (22) eines zweiten nicht runden Bewegungspfads auf dem Verbindungsabschnitt (18) aufweist, wobei die Verbindungsbohrungen (22) des zweiten nicht runden Bewegungspfads ein Rotationszentrum aufweisen und das Rotationszentrum der Verbindungsbohrungen (22) des zweiten nicht runden Bewegungspfads in einem Abstand vom Kettenblattzentrum (16) gehalten wird und auch in einem Abstand vom Rotationszentrum der Verbindungsbohrungen (20) des ersten nicht runden Bewegungspfads gehalten wird; das Kettenblatt (10) einen zweiten nicht runden Bewegungspfad bereitstellt, wenn die Verbindungsarme (34) des Kurbelarms (30) ausgewählt sind, um an die Verbindungsbohrungen (22) des zweiten nicht runden Bewegungspfads gesichert zu sein.

3. Fahrradkurbelsatz nach Anspruch 1, wobei ein Pfad des ersten nicht runden Bewegungspfad eine große Halbachse und eine kleine Halbachse aufweist und ein Verhältnis einer Länge der großen Halbachse zu einer Länge der kleinen Halbachse in einem Bereich zwischen 1,1 und 1,3 liegt.

4. Fahrradkurbelsatz nach Anspruch 1, wobei ein eingeschlossener Winkel zwischen dem Kurbelarm (30) und einer großen Halbachse des ersten nicht runden Bewegungspfads in einem Bereich zwischen 75 Grad und 120 Grad liegt.

## Revendications

1. Pédalier de bicyclette, qui est adapté pour être relié à une chaîne (40), comprenant :
un plateau (10) ayant une circonférence ronde (12) et une pluralité de dents (14) sur la circonférence (12) pour engager la chaîne, le plateau (10) ayant un centre de plateau (16), qui est un centre de la circonférence (12), et une partie de liaison (18) ;
le plateau (10) ayant une pluralité d'alésages de liaison (20) d'un premier trajet de mouvement non-circulaire sur la partie de liaison (18), les alésages de liaison (20) du premier trajet de mouvement non-circulaire ayant un centre de rotation, et le centre de rotation des alésages de liaison (20) du premier trajet de mouvement non-circulaire étant maintenu à une distance du centre de plateau (16) ;
le plateau (10) ayant une pluralité d'alésages de liaison (24) d'un trajet de mouvement circulaire sur la partie de liaison (18), les alésages de liaison (24) du trajet de mouvement circulaire ayant un centre de rotation, et un emplacement du centre de rotation des alésages de liaison (24) du trajet de mouvement circulaire étant le même que le centre de plateau (16) ; et
une manivelle (30) ayant une pluralité de bras de liaison (34) à une extrémité de celle-ci, et un alésage axial (38) à l'extrémité ayant les bras de liaison (34), la manivelle (30) ayant un centre de rotation à un centre de l'alésage axial (38), chacun des bras de liaison (34) ayant un alésage (36), et des distances entre des centres des alésages (36) et le centre de rotation de la manivelle (30) étant identiques ;
les bras de liaison (34) de la manivelle (30) étant choisis pour être fixés aux alésages de liaison (20) du premier trajet de mouvement non-circulaire ou aux alésages de liaison (24) du trajet de mouvement circulaire du plateau (10) ; le plateau (10) fournissant un premier trajet de mouvement non-circulaire lorsque les bras de liaison (34) de la manivelle (30) sont fixés aux alésages de liaison (20) du premier trajet de mouvement non-circulaire, et le plateau (10) fournissant un trajet de mouvement circulaire lorsque les bras de liaison (34) de la manivelle (30) sont fixés aux alésages de liaison (24) du trajet de mouvement circulaire.

2. Pédalier de bicyclette selon la revendication 1, dans lequel le plateau (10) a une pluralité d'alésages de liaison (22) d'un second trajet de mouvement non-circulaire sur la partie de liaison (18), les alésages de liaison (22) du second trajet de mouvement non-circulaire ayant un centre de rotation, et le centre de rotation des alésages de liaison (22) du second trajet de mouvement non-circulaire étant maintenu à une distance du centre de plateau (16), et également maintenu à une distance du centre de rotation des alésages de liaison (20) du premier trajet de mouvement non-circulaire ; le plateau (10) fournissant un second trajet de mouvement non-circulaire lorsque les bras de liaison (34) de la manivelle (30) sont choisis pour être fixés aux alésages de liaison (22) du second trajet de mouvement non-circulaire.

3. Pédalier de bicyclette selon la revendication 1, dans lequel un trajet du premier trajet de mouvement non-circulaire a un demi-grand axe et un demi-petit axe, et un rapport d'une longueur du demi-grand axe et d'une longueur du demi-petit axe est compris dans une plage entre 1,1 et 1,3.

4. Pédalier de bicyclette selon la revendication 1, dans lequel un angle inclus entre la manivelle (30) et un demi-grand axe du premier trajet de mouvement non-circulaire est compris dans une plage entre 75 degrés et 120 degrés.
